# EUROPÄISCHE PATENTSCHRIFT

(11) **EP 3 976 306 B1**
(45) Veröffentlichungstag und Bekanntmachung des Hinweises auf die Patenterteilung: **03.07.2024**
(21) Anmeldenummer: 20727190.9
(22) Anmeldetag: 14.05.2020
(51) Int. Cl.: B23K 20/12, B64C 1/00, B23K 103/18, B23K 101/28

(54) **VERFAHREN ZUM HERSTELLEN EINES TRAGELEMENTS FÜR EIN VERKEHRSMITTEL SOWIE EIN ENTSPRECHEND HERGESTELLTES TRAGELEMENT**
METHOD FOR PRODUCING A LOAD-BEARING ELEMENT FOR A MEANS OF TRANSPORTATION, AND A LOAD-BEARING ELEMENT PRODUCED ACCORDINGLY
PROCÉDÉ DE FABRICATION D'UN ÉLÉMENT DE SUPPORT DESTINÉ À UN MOYEN DE TRANSPORT AINSI QU'ÉLÉMENT DE SUPPORT FABRIQUÉ DE FAÇON CORRESPONDANTE

(30) Priorität: 29.05.2019 DE 102019114403
(43) Veröffentlichungstag der Anmeldung: 06.04.2022
(73) Patentinhaber: Airbus Operations GmbH, 21129 Hamburg (DE)
(72) Erfinder: SYASSEN, Freerk, 21129 Hamburg (DE)
(74) Vertreter: LKGLOBAL Lorenz & Kopf Patentanwalt Attorney at Law PartG mbB
(86) Internationale Anmeldenummer: PCT/EP2020/063525
(87) Internationale Veröffentlichungsnummer: WO 2020/239469

(56) Entgegenhaltungen:
- WO-A1-2010/097221
- CN-A- 107 971 624
- FR-A1- 2 963 262
- US-A1- 2012 145 867

## Beschreibung

### TECHNISCHES GEBIET

Die Erfindung betrifft ein Verfahren zum Herstellen einer Tragelements für ein Verkehrsmittel, ein Tragelement für ein Verkehrsmittel und ein Flugzeug mit einem Flugzeugrumpf und einer darin ausgebildeten Struktur, die mindestens ein solches Tragelement aufweist.

### HINTERGRUND DER ERFINDUNG

An Strukturkomponenten, die in Innenräumen von Verkehrsflugzeugen und anderen Verkehrsmitteln angeordnet werden, werden je nach Anwendung unterschiedliche Anforderungen gestellt. Zur Befestigung von Einbauten in einer Kabine werden etwa in Längsrichtung der Kabine verlaufende Tragelemente eingesetzt, welche Teil eines Fußbodenträgers sind oder hierauf befestigt werden. Da in einem Verkehrsflugzeug beträchtliche Lasten zur Dimensionierung solcher Tragelemente angenommen werden, sind sie üblicherweise mit einer entsprechend hohen Festigkeit ausgestattet.

Des Weiteren werden derartige Strukturkomponenten durch frequentierte Nutzung auch Verschmutzungen und sich ändernder Feuchtigkeit ausgesetzt, wodurch eine ausreichende Korrosionsbeständigkeit notwendig ist. Zur Erreichung einer hohen Festigkeit und einer hervorragenden Korrosionsbeständigkeit werden beispielsweise Sitzschienen oder Schienen zur Aufnahme von Kabinenmonumenten in einigen modernen Verkehrsflugzeugen bereits abschnittsweise aus Titan hergestellt. Die Bearbeitung dieses Materials ist allerdings kostenintensiv. Es ist bekannt, derartige Schienen in korrosionsempfindlichen Bereichen vollständig aus Titan herzustellen, was allerdings sehr kostenintensiv ist. Eine Kombination eines Abschnitts aus Titan und eines Abschnitts aus einem anderen Material könnte aus Gewichts- und Kostengründen zwar vorteilhaft sein, allerdings können Komponenten aus anderen Materialien nicht oder nicht mit den gewünschten Eigenschaften durch Kleben, Schmelzschweißen oder Löten mit Titankomponenten verbunden werden. Ein Beispiel hierzu ist beispielsweise aus der WO 2010/097221 A1 bekannt, bei der eine Trägerstruktur aus Titan und Aluminium mittels Reibrührschweißen zusammen gefügt wird. Dies kann dazu führen, dass für diesen Zweck form- oder kraftschlüssige Verbindungsverfahren eingesetzt werden müssen. Aufgrund der kostenintensiven Bearbeitung von Titankomponenten ist die Herstellung einer aus Titan und zusätzlich anderen Materialien bestehenden Schiene sehr aufwändig.

### ZUSAMMENFASSUNG DER ERFINDUNG

Es ist folglich eine Aufgabe der Erfindung, ein alternatives Verfahren zum Herstellen eines Tragelements für ein Verkehrsmittel vorzuschlagen, bei dem Abschnitte aus Titan und aus einem anderen Material kostengünstig miteinander verbindbar sind, jedoch mit einer hohen Festigkeit und gewünschten Bauteileigenschaften herstellbar sind.

Diese Aufgabe wird gelöst durch ein Verfahren mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Verfahren zum Herstellen einer Tragelements für ein Verkehrsmittel vorgeschlagen, aufweisend die Schritte des Bereitstellens eines flachen Basisgurts aus einem ersten Material mit einer ersten Oberfläche und einer zweiten Oberfläche, des Aufbringens mehrerer Schichten aufeinander und nebeneinander aus mindestens einem zweiten Material auf die erste Oberfläche unter Verwendung eines additiven Reibrührverfahrens, und der spanabhebenden Bearbeitung der Schichten aus dem zweiten Material zum Herstellen eines gewünschten Profilquerschnitts des Tragelements mit Stegen und Flanschen, wobei das erste Material und das zweite Material voneinander verschiedene metallische Materialien sind.

Ein flacher Basisgurt ist als ein Teil eines Tragelements zu verstehen, das ein bestimmtes Profil besitzt. Der Basisgurt könnte etwa eine flache, streifenartige Form besitzen und im weiteren Verlauf der Herstellung des Tragelements mit einem Steg oder einer anderen, mit dem Basisgurt zu verbindenden Komponente zu einem vollständigen Tragelement ergänzt werden. Der Basisgurt könnte etwa als eine Aufnahmefläche und/oder Befestigungsfläche für Einbauten in einer Kabine eines Verkehrsmittels fungieren.

Erfindungsgemäß ist der flache Basisgurt aus dem ersten Material hergestellt. Die erste Oberfläche und die zweite Oberfläche können geometrische Hauptflächen des Basisgurts sein, die jeweils in der Haupterstreckungsebene verlaufen und den Basisgurt an zwei einander gegenüberliegenden Seiten begrenzen. Sie können daher insbesondere parallel zueinander ausgeführt sein.

Durch ein additives Reibrührverfahren werden mehrere Schichten aus dem mindestens einen zweiten Material anschließend auf die erste Oberfläche aufgebracht. Es hat sich überraschend gezeigt, dass sich durch ein auf Reibung basierendes Verfahren, beispielsweise ein additives Reibrührverfahren, unterschiedliche Materialkombinationen sehr gut verbinden lassen. Bei einem solchen Verfahren wird das zweite Material durch ein rotierendes und auf dem Basisgurt aufgepresstes Werkzeug in bzw. auf die erste Oberfläche ein- bzw. aufgerührt. Hierdurch ergibt sich insbesondere eine hochfeste Verbindung zwischen dem ersten Material und dem zweiten Material mit einer verfeinerten Kornstruktur.

Es ist kein weiterer Verdichtungsschritt erforderlich, um die Materialeigenschaften zu verbessern.

Ein dadurch erreichter besonderer Vorteil liegt darin, dass auf das zweite Material weitere Bauteile aus dem zweiten Material oder einem anderen Material anbringbar sind. Die Schichten aus dem zweiten Material können damit als Schnittstelle zwischen dem Basisgurt und einem anderen Bauteil fungieren, das aus dem zweiten oder einem anderen Material hergestellt ist und nicht unmittelbar mit dem Basisgurt verbindbar ist.

Bei einem für die Anwendung als Tragelement in einem Innenraum eines Verkehrsflugzeugs geeigneten Beispiel kann der Basisgurt etwa aus Titan ausgeführt sein, während das zweite Material eine auf Aluminium basierende Legierung sein kann. Kleben, Schmelzschweißen und Löten ist für eine Verbindung dieser beiden Materialien kaum anwendbar, so dass erfindungsgemäß das Auftragen von Aluminium auf den Basisgurt eine Basis für weitere Bauteile aus Aluminium bereitstellt. Hierzu können konventionelle Verfahren verwendet werden. Folglich kann das erfindungsgemäße Verfahren eine besonders vorteilhafte und hochfeste Verbindung von unterschiedlichen Materialien zur Herstellung eines Tragelements ermöglichen.

Bevorzugt weist das Verfahren ferner den Schritt des Fügens eines zusätzlichen Bauteils auf die Schichten des zweiten Materials auf.

Der Basisgurt könnte folglich lediglich einen mehr oder weniger geringen Anteil eines Profils des Tragelements ausbilden. Stege, Flansche, Gurte und andere Bauteile können den Basisgurt zu einem vollständigen Tragelement ergänzen. Die Anbindung erfolgt dabei über die Schichten aus dem zweiten Material.

Es bietet sich an, das zusätzliche Bauteil aus dem zweiten Material herzustellen. Das Bauteil und die mindestens eine zweite Schicht sind damit vollständig kompatibel und lassen sich durch herkömmliche Verbindungsverfahren fügen.

Das Verfahren kann ferner den Schritt der spanabhebenden Bearbeitung der zweiten Oberfläche zum Herstellen einer sich entlang des Basisgurts erstreckenden Vertiefung aufweisen. Der Basisgurt kann dadurch die Form einer Schiene, insbesondere einer Sitzschiene für Passagiersitze oder einer Tragschiene für Kabinenmonumente oder andere Einbauten in dem Innenraum einnehmen. Die Vertiefung kann eine längliche Vertiefung sein und/oder als eine Reihe von aneinandergereihten, einzelnen Vertiefungen ausgeführt sein. Die erste Oberfläche, die mindestens eine Schicht aus dem zweiten Material sowie alle daran angeordneten, optionalen Bauteile schließen sich auf einer von dem Basisgurt abgewandten Seite an und können eine Tragstruktur ausbilden, die etwa in eine Fußbodenstruktur integriert ist. Der Basisgurt könnte dann bündig mit dem Fußboden abschließen.

Es ist besonders vorteilhaft, wenn eine Profilhöhe des Profilquerschnitts des Tragelements entlang einer Haupterstreckungsrichtung des Basisgurts nicht konstant ist. Die Ausgestaltung des Profilquerschnitts kann unabhängig von der Verarbeitbarkeit des ersten Materials beliebig erfolgen, da auch komplexere Formen durch Verbindung mit der mindestens einen Schicht aus dem zweiten Material fest mit dem Basisgurt verbunden werden können. Dies erlaubt beispielsweise trotz der Verwendung von Titan oder ähnlichen hochfesten Materialien zur Bereitstellung einer Aufnahmefläche eine praktisch beliebige Formgebung von Tragelementen.

In einer vorteilhaften Ausführungsform weist der Profilquerschnitt des Tragelements mindestens einen dem Basisgurt gegenüberliegend angeordneten Untergurt auf, wobei zwischen dem Basisgurt und dem mindestens einen Untergurt mindestens ein Steg verläuft. Der Steg und der Untergurt könnten aus dem zweiten Material hergestellt oder damit kompatibel sein und durch andere Verfahren gewonnen werden. Für Bauteile mit einem gleichbleibenden Profilquerschnitt könnte ein Extrusionsverfahren sinnvoll sein. Für andere, im Profil variable Bauteile könnten insbesondere spanabhebende oder additive Verfahren in Erwägung gezogen werden.

Wie vorangehend dargelegt könnte der Basisgurt Titan aufweisen. Damit kann eine hochfeste Auflage- und/oder Befestigungsfläche insbesondere für Einbauten in einer Kabine eines Verkehrsmittels realisiert werden.

Da aus Festigkeitsgründen nicht erforderlich ist, das gesamte Tragelement aus einem hochfesten Werkstoff, z.B. Titan, herzustellen, kann das zweite Material eine etwas geringere Festigkeit aufweisen und durch eine geeignete Gestaltung ein ausreichendes Flächenträgheitsmoment bereitstellen. In einer vorteilhaften Ausführungsform kann die mindestens eine Schicht aus dem zweiten Material Aluminium aufweisen. Durch das auf Reibung basierende Verfahren, welches erfindungsgemäß ein additives Reibrührverfahren ist, können Schichten aus Aluminium auf dem Basisgurt angeordnet werden und die Anordnung weiterer Bauteile aus Aluminium erlauben.

Die Erfindung betrifft ferner ein Tragelement für ein Verkehrsmittel, aufweisend einen flachen Basisgurt aus einem ersten Material mit einer ersten Oberfläche und einer zweiten Oberfläche, und mehrere Schichten aus mindestens einem zweiten Material, das auf die erste Oberfläche unter Verwendung eines additiven Reibrührverfahrens aufeinander und nebeneinander aufgebracht und spanabhebend bearbeitet ist, so dass das Tragelement einen gewünschten Profilquerschnitt mit Stegen und Flanschen aufweist.
wobei das erste Material und das zweite Material voneinander verschiedene metallische Materialien sind.

Wie vorangehend erläutert ist in einer vorteilhaften Ausführungsform eine Profilhöhe des Profilquerschnitts des Tragelements entlang einer Haupterstreckungsrichtung des Basisgurts nicht konstant. Die Haupterstreckungsrichtung kann dabei eine Laufrichtung des Basisgurts sein, die parallel zu mindestens einer Längskante oder einer zwischen Längskanten liegenden Mittelachse verläuft.

Weiterhin könnte der Profilquerschnitt des Tragelements mindestens einen dem Basisgurt gegenüberliegend angeordneten Untergurt aufweisen, wobei zwischen dem Basisgurt und dem mindestens einen Untergurt mindestens ein Steg verläuft. Der Steg dient zur räumlich definierten Anordnung des Basisgurts und des Untergurts zur Schaffung eines gewünschten Flächenträgheitsmoments. Er kann zur Reduktion des Gewichts eine oder mehrere Ausschnitte oder Bohrungen aufweisen.

Wie vorangehend bereits erwähnt kann der Basisgurt Titan aufweisen.

Die Schichten aus dem zweiten Material können weiterhin, wie ebenfalls vorangehend erwähnt, Aluminium aufweisen.

Es ist vorteilhaft, wenn die zweite Oberfläche eine sich entlang des Basisgurts erstreckende Vertiefung zum Aufnehmen von Verbindungselementen aufweist. Damit kann eine Auflage oder Befestigung von Einbauten durchgeführt werden. Es ist etwa vorstellbar, dass die Vertiefung ein hinterschnittenes Profil aufweist, das mehrere entlang der Haupterstreckungsrichtung des Tragelements aufeinanderfolgende kreisrunde Öffnungen besitzt, die von einem Schlitz durchsetzt sind.

In einer besonders vorteilhaften Ausführungsform ist ein zusätzliches Bauteil mit den Schichten des zweiten Materials stoffschlüssig verbunden und aus dem zweiten Material hergestellt, dazu kompatibel oder weist dieses auf.

Das Tragelement könnte aus einer Gruppe von Tragelementen ausgewählt sein, die Gruppe aufweisend eine Fußbodenschiene, einen Querträger, einen Längsträger, einen Holm, einen Stringer, und einen Spant.

Schließlich betrifft die Erfindung ein Flugzeug, aufweisend einen Flugzeugrumpf mit einer darin ausgebildeten Struktur, wobei die Struktur mindestens ein Tragelement nach der vorangehenden Beschreibung aufweist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren.

In den Figuren stehen weiterhin gleiche Bezugszeichen für gleiche oder ähnliche Objekte.
Fig. 1 zeigt eine schematische Darstellung eines geeigneten Werkzeugs zur Anordnung einer Schicht aus dem zweiten Material.
Fig. 2a und 2b zeigen eine Anordnung von Schichten aus dem zweiten Material (Fig. 2a) und eine Endkontur nach spanabhebender Bearbeitung (Fig. 2b).
Fig. 3a und 3b zeigen ein Tragelement in einer räumlichen Darstellung.
Fig. 4 zeigt ein Flugzeug.
Fig. 5 zeigt ein erfindungsgemäßes Verfahren in einer schematischen, blockbasierten Darstellung.

### DETAILLIERTE DARSTELLUNG EXEMPLARISCHER AUSFÜHRUNGSFORMEN

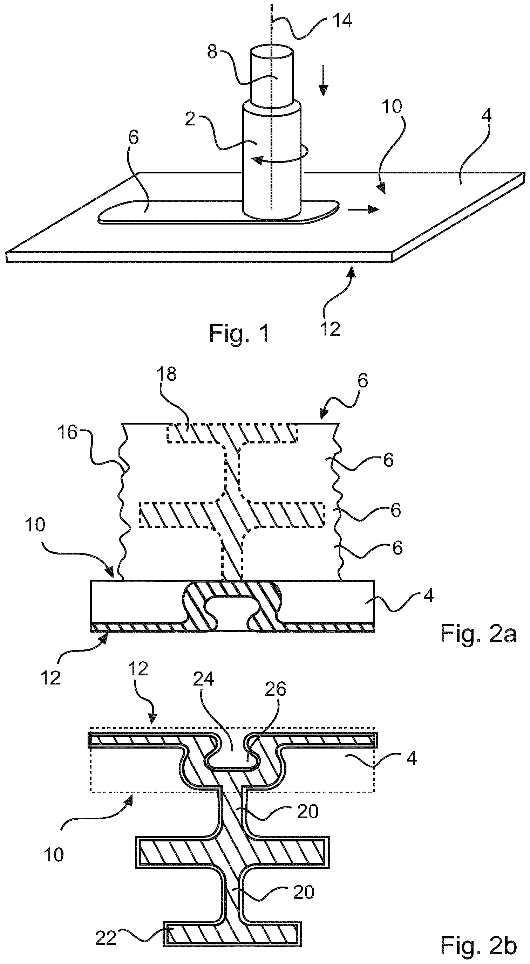

In Fig. 1 wird ein Werkzeug 2 für einen Reibrührauftrag schematisch dargestellt, welches auf einen flachen Basisgurt 4, der aus einem ersten Material hergestellt ist, eine Schicht 6 aus einem hiervon verschiedenen zweiten Material 8 aufträgt. Der Basisgurt 4 kann etwa aus Titan bestehen. Er liegt auf einer nicht dargestellten Unterlage auf, so dass eine erste Oberfläche 10 zum Aufbringen des zweiten Materials 8 zu dem Werkzeug 2 gerichtet ist und eine zweite Oberfläche 12 auf der Unterlage aufliegt. Das Werkzeug 2 wird um eine Rotationsachse 14 rotiert und entlang ihr auf die erste Oberfläche 10 gepresst, so dass das zweite Material 8 unter Einwirkung von Druck und Reibung erwärmt und in die erste Oberfläche 10 gepresst wird. Hieraus entsteht die schematisch dargestellte Schicht 6.

Erfindungsgemäß werden mehrere Schichten 6 aufeinander und nebeneinander auf die erste Oberfläche 10 aufgetragen. Hierdurch könnten praktisch beliebige Aufbaudicken und Konturen geschaffen werden. Ist der Basisgurt 4 aus Titan gefertigt und ist das zweite Material 8 Aluminium, kann durch das Werkzeug 2 eine hochfeste Verbindung zwischen der Schicht 6 und dem Basisgurt 4 erreicht werden. Auf die Schicht 6 können weitere Schichten 6 oder Bauteile aus demselben zweiten Material 8 oder einem kompatiblen Material aufgebracht werden.

In Fig. 2a wird der Basisgurt 4 dargestellt, auf dem mehrere Schichten 6 angeordnet sind. Diese weisen zunächst noch ungenaue Profilkonturen 16 auf, die sich durch vergleichsweise unscharfe Ränder der Schichten 6 erklären. Gestrichelt ist eine Endkontur 18 dargestellt, die eine spätere Profilgeometrie repräsentiert und aus der Anordnung von Schichten 6 durch Fräsen, Schleifen oder andere spanabhebende Verfahren herausgearbeitet wird.

Die Endkontur 18 wird in Fig. 2b noch einmal separat dargestellt. Hier sind Stege 20 und Flansche 22 angeordnet, die den Basisgurt 4 zu einem vollständigen Tragelement mit einem gewünschten Flächenträgheitsmoment und erforderlichen Anschlussflächen ergänzen. Es ist dabei vorstellbar, dass der Basisgurt 4 außerdem eine Vertiefung 24 aufweist, die sich in und durch die zweite Oberfläche 12 erstreckt.

Beispielhaft weist die Vertiefung 24 Hinterschneidungen 26 auf, die zum Anbringen und Festklemmen von Verbindungsmitteln verwendbar sind.

Neben dem schichtweisen Aufbau durch Anbringen mehrerer Schichten 6 wäre auch denkbar, zusätzlich zu den Schichten 6 ein oder mehrere separate Bauteile 28 an den Basisgurt 4 anzubringen. Hierzu können die Schichten 6 aus dem zweiten Material verwendet werden, um Bauteile 28 aus einem kompatiblen Material durch gängige stoffschlüssige Verbindungsverfahren daran anzubringen. Beispielsweise könnten mehrere Stege 28 als Bauteile angebracht werden, die weiterhin durch einen Untergurt 30 an einer von dem Basisgurt 4 beabstandeten Seite der Stege 28 ergänzt werden. Die Stege können quer zu dem Basisgurt 4 angebracht werden, beispielsweise senkrecht dazu.

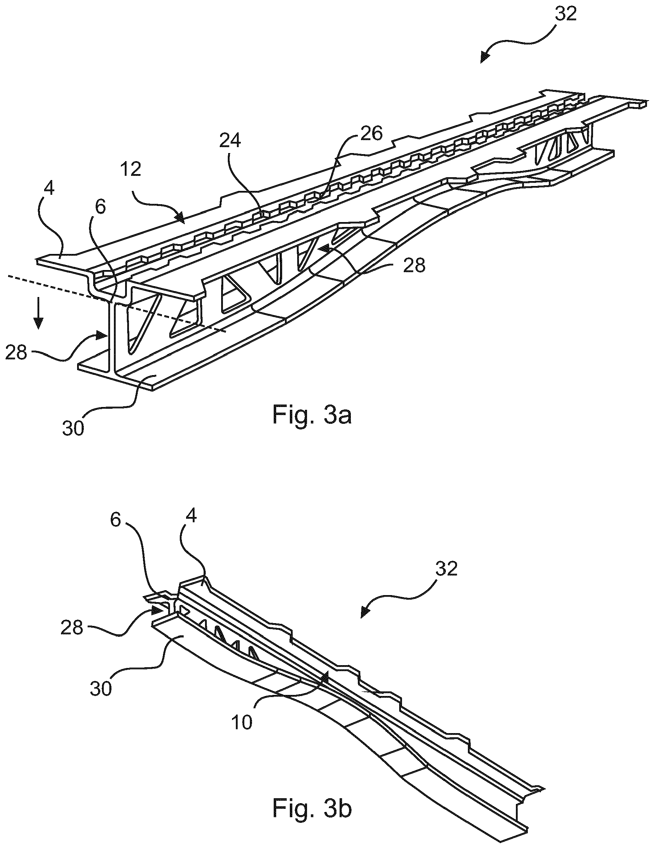

Da das Verfahren sehr flexibel ist, kann anders als bei einer reinen Extrusion ein vollständig variabler Profilquerschnitt gewährleistet werden. Dieser drückt sich in den Figuren 3a und 3b beispielsweise durch einen variablen Abstand zwischen den Basisgurt 4 und dem Untergurt 30 aus. Der Untergurt 30 weist eine quer zu seiner Haupterstreckungsrichtung geschwungene, flächige Form auf und ist mit Stegen 28 unterschiedlicher Länge mit dem Basisgurt 4 verbunden. Dadurch kann sich insbesondere eine gewichts- und belastungsoptimierte Ausgestaltung eines Tragelements 32 realisieren lassen.

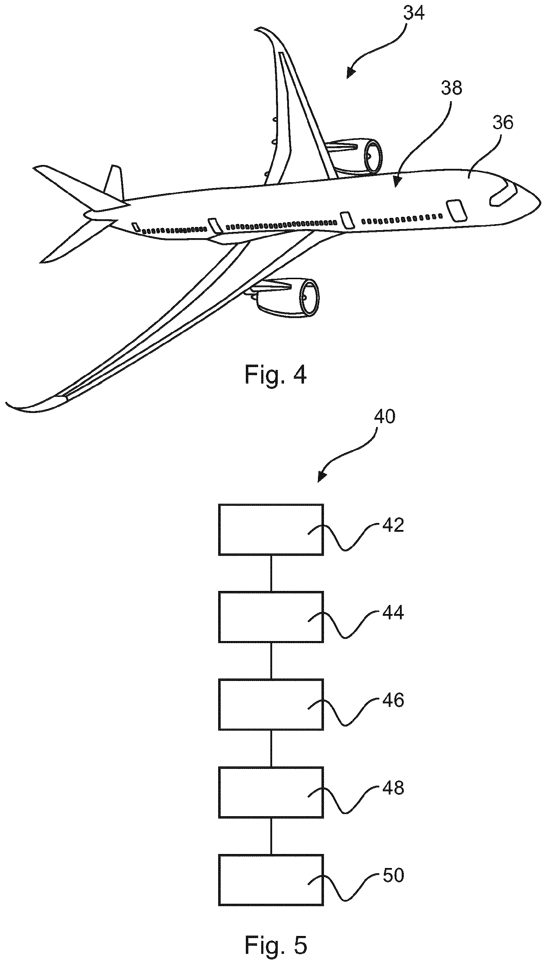

Fig. 4 zeigt weiterhin ein Flugzeug 34 mit einem Rumpf 36, einen darin ausgebildeten Innenraum 38 und mindestens einem Tragelement in dem Innenraum 38.

Der Vollständigkeit halber wird in Fig. 5 ein schematischer Ablauf eines erfindungsgemäßen Verfahrens dargestellt. Ein Verfahren 40 zum Herstellen eines Tragelements für ein Verkehrsmittel weist die Schritte des Bereitstellens 42 eines flachen Basisgurts aus einem ersten Material mit einer ersten Oberflächen und einer zweiten Oberfläche auf, des Aufbringens 44 mehrerer Schichten 6 aufeinander und nebeneinander aus mindestens einem zweiten Material auf die erste Oberfläche unter Verwendung eines additiven Reibrührverfahrens und des spanabhebenden Bearbeitens 46 der Schichten 6 aus dem zweiten Material zum Herstellen eines gewünschten Profilquerschnitt des Tragelements 32 mit Stegen 20 und Flanschen 22. Das Verfahren kann ferner das Fügen 48 eines zusätzlichen Bauteils auf den Schichten 6 des zweiten Materials aufweisen. Des Weiteren kann das Verfahren ein spanabhebendes Bearbeiten 50 der zweiten Oberfläche zum Herstellen einer sich entlang des Basisgurts erstreckenden Vertiefung aufweisen.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Werkzeug
- 4: Basisgurt
- 6: Schicht
- 8: zweites Material
- 10: erste Oberfläche
- 12: zweite Oberfläche
- 14: Rotationsachse
- 16: Profilkontur
- 18: Endkontur
- 20: Steg
- 22: Flansch
- 24: Vertiefung
- 26: Hinterschneidung
- 28: Steg / Bauteil
- 30: Untergurt
- 32: Tragelement
- 34: Flugzeug
- 36: Rumpf
- 38: Innenraum
- 40: Verfahren
- 42: Bereitstellen Basisgurt
- 44: Aufbringen mindestens einer Schicht
- 46: Spanabhebendes Bearbeiten
- 48: Fügen
- 50: Spanabhebendes Bearbeiten (Vertiefung)

## Patentansprüche

1. Verfahren (40) zum Herstellen einer Tragelements (32) für ein Verkehrsmittel (34), aufweisend die Schritte:
Bereitstellen (42) eines flachen Basisgurts (4) aus einem ersten Material mit einer ersten Oberfläche (10) und einer zweiten Oberfläche (12),
Aufbringen (44) mehrerer Schichten (6) aufeinander und nebeneinander aus mindestens einem zweiten Material (8) auf die erste Oberfläche (10) unter Verwendung eines additiven Reibrührverfahrens , und
Spanabhebende Bearbeitung (46) der Schichten (6) aus dem zweiten Material zum Herstellen eines gewünschten Profilquerschnitts des Tragelements (32) mit Stegen (20) und Flanschen (22),
wobei das erste Material und das zweite Material (8) voneinander verschiedene metallische Materialien sind.

2. Verfahren (40) nach Anspruch 1, ferner aufweisend den Schritt:
Fügen (48) eines zusätzlichen Bauteils (28) auf mindestens einer Schicht (6) des zweiten Materials (8).

3. Verfahren (40) nach Anspruch 2,
wobei das zusätzliche Bauteil (28) aus dem zweiten Material (8) hergestellt ist.

4. Verfahren (40) nach einem der vorhergehenden Ansprüche, ferner aufweisend den Schritt:
Spanabhebende Bearbeitung (50) der zweiten Oberfläche (12) zum Herstellen einer sich entlang des Basisgurts (4) erstreckenden Vertiefung (24).

5. Verfahren (40) nach einem der vorhergehenden Ansprüche,
wobei eine Profilhöhe des Profilquerschnitts des Tragelements (32) entlang einer Haupterstreckungsrichtung des Basisgurts (4) nicht konstant ist.

6. Verfahren (40) nach einem der vorhergehenden Ansprüche,
wobei der Profilquerschnitt des Tragelements (32) mindestens einen dem Basisgurt (4) gegenüberliegend angeordneten Untergurt (30) aufweist, und
wobei zwischen dem Basisgurt (4) und dem mindestens einen Untergurt (30) mindestens ein Steg (20, 28) verläuft.

7. Verfahren (40) nach einem der vorhergehenden Ansprüche,
wobei der Basisgurt (4) Titan aufweist.

8. Verfahren (40) nach einem der vorhergehenden Ansprüche,
wobei die Schichten (6) aus dem zweiten Material Aluminium aufweisen.

9. Tragelement (32) für ein Verkehrsmittel, aufweisend:
einen flachen Basisgurt (4) aus einem ersten Material mit einer ersten Oberfläche (10) und einer zweiten Oberfläche (12), und
mehrere Schichten (6) aus mindestens einem zweiten Material (8), das auf die erste Oberfläche (10) unter Verwendung eines additiven Reibrührverfahrens aufeinander und nebeneinander aufgebracht und spanabhebend bearbeitet ist, so dass das Tragelement (32) einen gewünschten Profilquerschnitt mit Stegen (20) und Flanschen (22) aufweist,
wobei das erste Material und das zweite Material (8) voneinander verschiedene metallische Materialien sind.

10. Tragelement (32) nach Anspruch 9,
wobei eine Profilhöhe des Profilquerschnitts des Tragelements (32) entlang einer Haupterstreckungsrichtung des Basisgurts nicht konstant ist.

11. Tragelement (32) nach Anspruch 9 oder 10,
wobei der Profilquerschnitt des Tragelements (32) mindestens einen dem Basisgurt (4) gegenüberliegend angeordneten Untergurt (30) aufweist, und
wobei zwischen dem Basisgurt (4) und dem mindestens einen Untergurt (30) mindestens ein Steg (20, 28) verläuft.

12. Tragelement (32) nach einem der Ansprüche 7 bis 11,
wobei die zweite Oberfläche (12) eine sich entlang des Basisgurts (4) erstreckende Vertiefung (24) zum Aufnehmen von Verbindungselementen aufweist.

13. Tragelement (32) nach Anspruch 12,
wobei ein zusätzliches Bauteil (28) mit mindestens einer Schicht (6) des zweiten Materials (8) stoffschlüssig verbunden ist und aus dem zweiten Material (8) hergestellt ist, dazu kompatibel ist oder dieses aufweist.

14. Tragelement (32) nach einem der Ansprüche 7 bis 13,
wobei das Tragelement (32) aus einer Gruppe von Tragelementen ausgewählt ist, die Gruppe aufweisend:
Fußbodenschiene,
Querträger,
Längsträger,
Holm,
Stringer, und
Spant.

15. Flugzeug (34), aufweisend einen Flugzeugrumpf (36) mit einer darin ausgebildeten Struktur, wobei die Struktur mindestens ein Tragelement (32) nach einem der Ansprüche 9 bis 14 aufweist.

## Claims

1. Method (40) for producing a load-bearing element (32) for a means of transport (34), having the steps of:
providing (42) a flat base chord (4) made of a first material with a first surface (10) and a second surface (12),
applying (44) a plurality of layers (6), one on top of the other and next to one another, of at least one second material (8) to the first surface (10) using an additive friction-stir method, and
machining (46) the layers (6) of the second material in order to produce a desired profile cross section of the load-bearing element (32) with webs (20) and flanges (22),
wherein the first material and the second material (8) are metallic materials that are different from one another.

2. Method (40) according to Claim 1, furthermore having the step of:
joining (48) an additional component (28) to at least one layer (6) of the second material (8).

3. Method (40) according to Claim 2,
wherein the additional component (28) is produced from the second material (8).

4. Method (40) according to one of the preceding claims, furthermore having the step of:
machining (50) the second surface (12) in order to produce a recess (24) that extends along the base chord (4) .

5. Method (40) according to one of the preceding claims,
wherein a profile height of the profile cross section of the load-bearing element (32) is not constant along a main direction of extent of the base chord (4).

6. Method (40) according to one of the preceding claims,
wherein the profile cross section of the load-bearing element (32) has at least one lower chord (30) that is arranged opposite the base chord (4), and
wherein at least one web (20, 28) runs between the base chord (4) and the at least one lower chord (30).

7. Method (40) according to one of the preceding claims,
wherein the base chord (4) comprises titanium.

8. Method (40) according to one of the preceding claims,
wherein the layers (6) of the second material comprise aluminium.

9. Load-bearing element (32) for a means of transport, having:
a flat base chord (4) made of a first material with a first surface (10) and a second surface (12), and
a plurality of layers (6) of at least one second material (8), which is applied, one on top of the other and next to one another, to the first surface (10) using an additive friction-stir method and machined such that the load-bearing element (32) has a desired profile cross section with webs (20) and flanges (22),
wherein the first material and the second material (8) are metallic materials that are different from one another.

10. Load-bearing element (32) according to Claim 9,
wherein a profile height of the profile cross section of the load-bearing element (32) is not constant along a main direction of extent of the base chord.

11. Load-bearing element (32) according to Claim 9 or 10,
wherein the profile cross section of the load-bearing element (32) has at least one lower chord (30) that is arranged opposite the base chord (4), and
wherein at least one web (20, 28) runs between the base chord (4) and the at least one lower chord (30).

12. Load-bearing element (32) according to one of Claims 7 to 11,
wherein the second surface (12) has a recess (24) that extends along the base chord (4) for receiving connecting elements.

13. Load-bearing element (32) according to Claim 12, wherein an additional component (28) is integrally bonded to at least one layer (6) of the second material (8) and is produced from, is compatible with, or comprises, the second material (8).

14. Load-bearing element (32) according to one of Claims 7 to 13,
wherein the load-bearing element (32) is selected from a group of load-bearing elements, the group comprising:
floor rail,
crossmember,
longitudinal member,
spar,
stringer, and
frame.

15. Aircraft (34), having an aircraft fuselage (36) with a structure formed therein, wherein the structure has at least one load-bearing element (32) according to one of Claims 9 to 14.

## Revendications

1. Procédé (40) de production d'un élément de support (32) pour un moyen de transport (34), présentant les étapes suivantes :
la fourniture (42) d'une courroie de base plate (4) en un premier matériau ayant une première surface (10) et une deuxième surface (12),
l'application (44) de plusieurs couches (6) l'une sur l'autre et côte à côte d'au moins un deuxième matériau (8) sur la première surface (10) en utilisant un procédé de friction-malaxage additif, et
l'usinage par enlèvement de copeaux (46) des couches (6) du deuxième matériau pour produire une section transversale de profil souhaitée de l'élément de support (32) avec des entretoises (20) et des brides (22),
dans lequel le premier matériau et le deuxième matériau (8) sont des matériaux métalliques différents l'un de l'autre.

2. Procédé (40) selon la revendication 1, présentant en outre l'étape suivantes :
l'assemblage (48) d'un composant supplémentaire (28) sur au moins une couche (6) du deuxième matériau (8).

3. Procédé (40) selon la revendication 2,
dans lequel le composant supplémentaire (28) est produit à partir du deuxième matériau (8).

4. Procédé (40) selon l'une quelconque des revendications précédentes, présentant en outre l'étape suivante :
l'usinage par enlèvement de copeaux (50) de la deuxième surface (12) pour produire un renfoncement (24) s'étendant le long de la courroie de base (4).

5. Procédé (40) selon l'une quelconque des revendications précédentes,
dans lequel une hauteur de profil de la section transversale de profil de l'élément de support (32) n'est pas constante le long d'une direction d'extension principale de la courroie de base (4).

6. Procédé (40) selon l'une quelconque des revendications précédentes,
dans lequel la section transversale de profil de l'élément de support (32) présente au moins une courroie inférieure (30) agencée en face de la courroie de base (4), et
dans lequel au moins une entretoise (20, 28) s'étend entre la courroie de base (4) et l'au moins une courroie inférieure (30).

7. Procédé (40) selon l'une quelconque des revendications précédentes,
dans lequel la sangle de base (4) présente du titane.

8. Procédé (40) selon l'une quelconque des revendications précédentes,
dans lequel les couches (6) du deuxième matériau présentent de l'aluminium.

9. Elément de support (32) pour un moyen de transport, présentant :
une courroie de base plate (4) en un premier matériau ayant une première surface (10) et une deuxième surface (12), et
plusieurs couches (6) d'au moins un deuxième matériau (8), qui sont appliquées les unes sur les autres et côte à côte sur la première surface (10) en utilisant un procédé de friction-malaxage additif et qui sont usinées par enlèvement de copeaux, de telle sorte que l'élément de support (32) présente une section transversale de profil souhaitée avec des entretoises (20) et des brides (22),
dans lequel le premier matériau et le deuxième matériau (8) sont des matériaux métalliques différents l'un de l'autre.

10. Elément de support (32) selon la revendication 9, dans lequel une hauteur de profil de la section transversale de profil de l'élément de support (32) n'est pas constante le long d'une direction d'extension principale de la courroie de base.

11. Elément de support (32) selon la revendication 9 ou 10,
dans lequel la section transversale de profil de l'élément de support (32) présente au moins une courroie inférieure (30) agencée en face de la courroie de base (4), et
dans lequel au moins une entretoise (20, 28) s'étend entre la courroie de base (4) et l'au moins une courroie inférieure (30).

12. Elément de support (32) selon l'une quelconque des revendications 7 à 11,
dans lequel la deuxième surface (12) comprend un renfoncement (24) s'étendant le long de la courroie de base (4) pour recevoir des éléments de fixation.

13. Elément de support (32) selon la revendication 12, dans lequel un composant supplémentaire (28) est relié par liaison de matière à au moins une couche (6) du deuxième matériau (8) et est produit à partir du deuxième matériau (8), est compatible avec celui-ci ou présente celui-ci.

14. Elément de support (32) selon l'une quelconque des revendications 7 à 13,
dans lequel l'élément de support (32) est choisi dans un groupe d'éléments de support, le groupe présentant :
un rail de plancher,
un poutre transversale,
un longeron,
un montant,
une lisse, et
une nervure.

15. Aéronef (34) comprenant un fuselage (36) dans lequel est formée une structure, la structure comprenant au moins un élément de support (32) selon l'une quelconque des revendications 9 à 14.
